# EUROPEAN PATENT SPECIFICATION

(11) **EP 4 556 839 B1**
(45) Date of publication and mention of the grant of the patent: **19.08.2026**
(21) Application number: 24020329.9
(22) Date of filing: 15.11.2024
(51) Int. Cl.: F28D 9/00, F28F 3/02

(54) **HEAT EXCHANGER**
WÄRMETAUSCHER
ÉCHANGEUR DE CHALEUR

(30) Priority: 17.11.2023 PL 44675623
(43) Date of publication of application: 21.05.2025
(73) Proprietor: AIC Spólka Akcyjna, 81-577 Gdynia (PL)
(72) Inventor: Siemienczuk, Tomasz, 80-351 Gdansk (PL)
(74) Representative: Pomianek, Grazyna

(56) References cited:
- CN-A- 105 547 019
- CN-B- 114 370 777
- GB-A- 2 000 268
- US-A1- 2009 294 113
- US-A1- 2015 122 467
- US-A1- 2020 141 656

## Description

The invention concerns a heat exchanger.

The invention is intended for energy-efficient devices and systems for generating and processing energy.

Known in the prior art are numerous heat exchangers with rib-structured heat exchange surfaces, characterised by various rib shapes and their configurations. It is known that the shape, size, and configuration of the ribs carry an impact on heat exchange parameters, but using the ribs not only as the surface which improves heat exchange but also as a structural surface is a new feature.

Known are flat plate heat exchangers which usually consist of a stack of plates fitted in a frame. Heat exchangers can be designed so that they ensure fluid countercurrent, cross, or co-current flow paths for hot and cold fluid streams. The known heat exchanger plates feature ducts for the flow of fluid, where the ducts are mounted on the plate surface, and where the streams of cold and hot fluid are isolated from each other.

Also known are exchangers where the shape of the plates enables intensifying the heat exchange process for individual streams, or heat exchange between more than two streams.

Known from patent document EP 4 130 627 A1 is a heat exchange system and a rib structure of a heat exchanger. The rib structure incorporates wavy ribs positioned parallel to one another at specified distances, thus forming ducts for the flow of the working agent. The ducts for the flow of the working agent are configured so that they can be used in the mode of both natural and forced heat transfer convection.

Known from patent document EP 4 089 359 A1 is a heat exchanger plate fitted with numerous corrugations in the shape of ridges and grooves which form the flow paths along the plate surface, where the ridges and/or grooves are asymmetrical in shape with respect to the central ridge and/or groove line. The plates are set together to form a heat exchanger and can be bonded to one another permanently or detachably.

CN 114 370 777 B, on which the preamble of claim 1 is based, discloses a fluid channel structure for a printed circuit board heat exchanger, comprising a plurality of heat exchange plates, each of which is provided with a plurality of rows of fins along the length direction of the heat exchange plate, wherein the fins of two adjacent rows are arranged in a staggered manner, and the gaps between two adjacent fins in each row of the fins form a fluid channel, wherein the length and width of the fins of each row increase successively along the flow direction of the working medium.

GB 2 000 268 A discloses a heat exchanger elements (HE, M and MHE) with primary and secondary heat transfer surfaces which are cast integrally with one another. The secondary heat transfer surfaces being formed by pins by investment casting.

Known in the prior art is application of the diffusion bonding method in the process of producing plate heat exchangers. For example, known from patent document US 2022011053A1 is a heat exchanger in which many plates featuring paths for the flow of the working agent are stacked and bonded to one another by the diffusion bonding method.

The purpose of the present invention is to design a heat exchanger featuring structured heat exchange surface to be used in particular in plate heat exchangers working at high pressures and with fluids in supercritical state, capable of both intensifying heat exchange and strengthening heat exchanger structure which in turn results in reducing the amount of the necessary material. The invention solves the problem of reducing the size and weight of the plates intended for heat exchangers and thus reduces the size and weight of the heat exchangers which incorporate such plates and are designed for working at high pressures.

The purpose was achieved by developing the shape of the turbulising elements, their size, and arrangement with respect to one another and to the flow of the working agent.

According to the present invention, a heat exchanger comprising plates which feature turbulising elements, where the said plates are arranged alternately into a packet so that the neighbouring plates are turned 180° with respect to each other in relation to the direction of the flow of the working agent through the plates, and where the turbulising elements of the specific plate contact the flat side of the neighbouring plate, and further where the packet is fitted with at least one inlet connection and at least one outlet connection for the first working agent, the connections fixed to the plates for the flow of the first agent, and is also fitted with at least one inlet connection and at least one outlet connection for the second working agent, the connections fixed to the plates for the flow of the second working agent wherein the turbulising elements of a specific plate contact the flat side of the neighbouring plate at the point where the turbulising elements of the neighbouring plate are positioned or at the point where some of the turbulising elements of the neighbouring plate are positioned, where the height of the turbulising elements in the plates for the first working agent is different than the height of the turbulising elements in the plates for the second agent, is characterized in that the turbulising elements are set in an arrangement based on an equilateral triangle so that the distance between the rows equals the height of the equilateral triangle the apexes of which are positioned at the ends of two neighbouring turbulising elements of the same row and at the respective end of the turbulising element positioned in the neighbouring row between the said turbulising elements.

Preferably, the turbulising elements feature an arch-shaped side surface. Preferably, the cross section of the turbulising elements has the shape of the aeronautical profile or ellipse, where preferably the width of the turbulising elements does not exceed 7mm and preferably the length of the turbulising elements does not exceed 15 mm.

The expression 'width of the turbulising element' denotes the distance between the points in the cross section across the turbulising element (transversely to the direction of the flow of the working agent) which are found farthest apart.

The expression 'length of the turbulising element' denotes the distance between the points in the cross section along the turbulising element (in line with the direction of the flow of the working agent) which are found farthest apart. Preferably, the point of the maximum width of the turbulising elements falls no farther than 0.5 the length of the turbulising element when measuring from the leading edge, preferably at 0.10 the length.

In cross section, the turbulising elements can take the shape of a circle the diameter of which is preferably not larger than 15 mm.

Preferably, the height of the turbulising elements in any successive row is larger than that in the preceding row by the same value, or the height of the turbulising elements in any successive row is smaller than that in the preceding row by the same value.

Preferably, heat exchanger plates incorporate between 16000 and 39000 turbulising elements per 1 m² of the surface, not counting the turbulising elements.

Preferably, the turbulising elements are made of the same material as the plate body.

Preferably, the heat exchanger plate features a frame positioned along the perimeter of the plate.

The heat exchanger according to the invention demonstrates many advantages compared to the known solutions.

The geometry of the turbulising elements according to this invention enables fourfold intensification of the heat transfer coefficient compared to the known solutions, while retaining similar flow resistances.

The use of the turbulising elements made of the same material as the plate body guarantees far better heat exchange in the exchanger, and the distribution of the turbulising elements without any defined ducts enables flow of the agent in various directions depending on the working mode of the exchanger.

The use of a large number of small turbulising elements which at the same time play the function of elements bonding the neighbouring plates supported by the turbulising elements enables using plate materials of substantially smaller thicknesses compared to the known heat exchangers, thus resulting in smaller weight and lower cost of the exchanger.

Placing the turbulising elements in a packet in which plates are stacked one on top of another enables the most efficient use of heat transmission, at the same time improving the strength parameters of the heat exchange surface because heat exchange in the respective area requires nothing more but heat transmission which occurs along the shortest path, without any additional heat transfer resistances.

As the result, the weight and size of the heat exchanger according to this invention is much reduced compared to the standard heat exchangers available in the market, even by as much as 50%.

The possibility to use various techniques in the process of producing a single heat exchanger compared to the techniques used so far leads to optimisation of the time, cost, and quantity of the material used to produce the object of the invention. For example, making small elements by the incremental laser printing method based on the native material makes it possible to make very small elements at low consumption of the material, where laser cutting of the frames guarantees adequate precision and very short time of production of these larger elements.

An embodiment of the invention is presented in the drawings, where:
Fig. 1 shows a section of the heat exchange surface viewed from the top;
Fig. 2 presents a turbulising element viewed from the top;
Fig. 3 depicts a turbulising element in side view;
Fig. 4 shows a plate with the heat exchange surface as in Fig. **1****,** in spatial view from the top;
Fig. 5 presents the position of the turbulising elements of two neighbouring heat exchanger plates;
Fig. 6 depicts a plate stack in spatial view;
Fig. 7 presents the heat exchanger in spatial view;
Fig. 8 shows the heat exchanger in cross section;
Fig. 9 depicts the heat exchanger in cross section;
Fig. 10 shows a block diagram of a sample method of carrying out the heat exchanger.

### Invention embodiments.

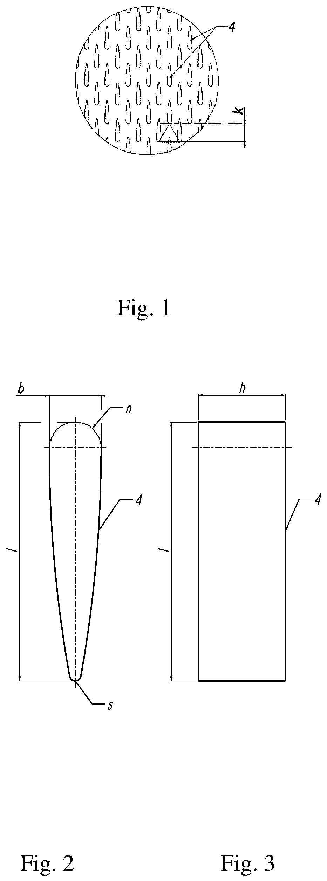

Cut of stainless steel (SA-240 316L) 0.5 mm thick, for example using a laser, are rectangular plates 1A, 1B sized 122 mm x 280 mm. Then, laser-cut in each corner of rectangular plates 1A, 1B are openings 2, 2' positioned on the opposite side along one diagonal and openings 3, 3' positioned on the opposite side along the other diagonal, always keeping the minimum distance of 8 mm to the edges of plates 1A, 1B. The said openings 2, 2', 3, 3' are given the shape of a circle of the diameter of 24 mm for one of the working agents and 30 mm for the other working agent and their function is to evenly distribute and discharge the working agent to/from plates 1A, 1B of the heat exchanger. Then, formed on one side of each of the plates 1A, 1B by e.g. the method of incremental laser printing using the same material as the material of the plate, i.e. powder SA-240 316L, are turbulising elements 4 with arch-shaped side surfaces, where the turbulising elements 4 are arranged into rows so that turbulising elements 4 in the neighbouring rows of each of the plates 1A, 1B are positioned alternately to one another, and where turbulising elements 4 in all rows of each of the plates 1A, 1B are pointing in the same direction as the direction of the flow of the working agent. Turbulising elements 4 are distributed evenly on plates 1A, 1B in an arrangement based on the equilateral triangle the side of which is e.g. 5.5 mm long so that the distance k between the rows is equal to the height of the equilateral triangle the apexes of which are positioned at the ends of the two neighbouring turbulising elements 4 of the same row and at the corresponding end of the turbulising element 4 positioned in the neighbouring row between the said turbulising elements 4, as presented in Fig. 1.

Turbulising elements 4 and frame 5 can be cut of a steel sheet and then the formed turbulising elements 4 and frame 5 can be placed on the surface of plates 1A, 1B, for example as described above, and bonded to the body of plates 1A, 1B by the diffusion bonding technology.

In one of the embodiments, the cross section of turbulising elements 4 takes the shape of the symmetrical aeronautical profile, as shown in Fig. 1 and Fig. 2. In this embodiment, the leading edge n of turbulising element 4 is given the shape of an arch, and the trailing edge s of turbulising element 4 is given the shape of an arch, where the radius of the trailing edge s is smaller than the radius of the leading edge n (Fig. 2).

The width b of turbulising elements 4 does not exceed 7 mm, in this particular embodiment being 1.2 mm, and their length 1 does not exceed 15 mm, in this particular embodiment being 6 mm.

The point of the maximum width b of turbulising elements 4 falls at the distance of up to 0.5 the length 1 of turbulising element 4 measuring from the leading edge n, preferably at 0.10 the length 1. The ratio of the maximum width b of turbulising element 4 and the length 1 is 1:5.

Turbulising elements 4 on plates 1A, 1B are oriented so that their wider side faces the inflowing agent, i.e. in opposite directions for CO₂ and water, because of the opposite direction of their flow with respect to the length of the exchanger.

The rib structure can incorporate between 16000 and 39000 turbulising elements per 1 m² of the surface, not counting the turbulising elements which occupy between 8% and 20% of the surface, respectively.

On a single plate 1A, 1B there can be 950 elements distributed evenly and alternately.

In other embodiments, the cross section of turbulising elements 4 is given the shape of a circle the diameter of which does not exceed 15 mm, or an ellipse the width of which does not exceed 7 mm and its length 1 does not exceed 15 mm.

In yet other embodiments, the cross section of the turbulising elements can be given the shape of any desired figure.

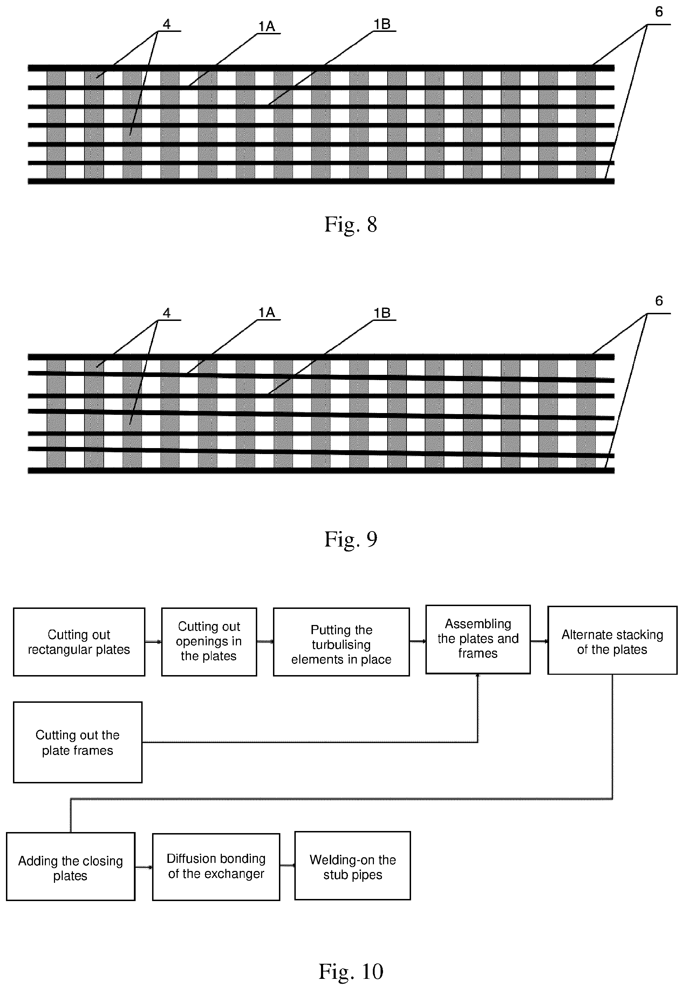

In one of the embodiments, the height h of turbulising elements 4 is the same in all rows (Fig. 8), while in other embodiments the height h of turbulising elements 4 in any successive row is larger than that in the preceding row by the same value, and in yet another embodiment the height h of turbulising elements 4 in any successive row is smaller than that in the preceding row by the same value, always with respect to the direction of the flow of the working agent (Fig. 9).

The height h of turbulising elements 4 depends on the working agent and is 1 mm for CO₂ and 2 mm for water.

Placed on each of the plates 1A, 1B are turbulising elements 4 of the height h corresponding to the agent which flows through the plate. Then, made in the simultaneous laser cutting process from the same material as that used for the plates 1A, 1B, are frames 5 of plates 1A, 1B of the heat exchanger. Frames 5 are 8 mm thick along the perimeter of openings 2, 2', 3, 3', and 3 mm elsewhere. The perimeter and shape of frames 5 is the same as the perimeters and shapes of plates 1A, 1B. Two openings 2, 2' or 3, 3', placed in the corners at the diagonal of each of the plates 1A, 1B, are blinded with an additional element of frame 5, which prevents mutual mixing of the working agents flowing through plates 1A, 1B. The height of each of the frames 5 corresponds to the height h of the turbulising element 4 on the corresponding plate 1A and 1B. If the height h of turbulising elements 4 grows / diminishes along the length of plate 1A, 1B, the height of frame 5 increases/ decreases correspondingly to the increase/decrease of the height h of turbulising elements 4.

So prepared frames 5 are put in place using assembly elements in the form of a stacking frame placed on each of the plates 1A, 1B, where the shape and dimensions of the stacking frame correspond to the shape and dimensions of plates 1A, 1B, which enables proper positioning of all elements found on each of the plates 1A, 1B, turbulising elements 4 included.

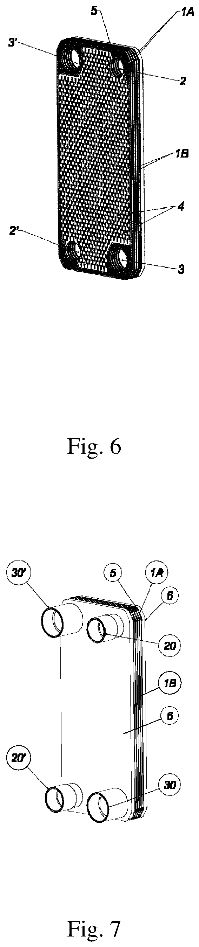

An embodiment of the heat exchanger incorporates two types of plates 1A and 1B, in this variant specifically CO₂ plates and water plates. Each of the plates 1A, 1B features only two open openings 2, 2' or 3, 3' positioned on the opposite sides at the diagonal of each of the plates 1A, 1B. The other two openings are blanked. Opposite ducts blanked on the water plate are open on the CO₂plate and vice-versa, i.e. the opposite ducts blanked on the CO₂ plate are open on the water plate. Then, plates 1A, 1B are stacked alternately one on top of another (Fig. 6), in line with the pre-determined direction of the flow of the working agents through the plates so that the working agents flow in countercurrent, and the stacking is performed using a stacking frame featuring such characteristic structural elements as clasps, positioning elements, the shape of which is reflected on the surfaces of plates 1A, 1B and prevents incorrect stacking of the plates. Plates 1A, 1B are arranged so that the flat side of the subsequent plate contacts the turbulising elements 4 of the preceding plate.

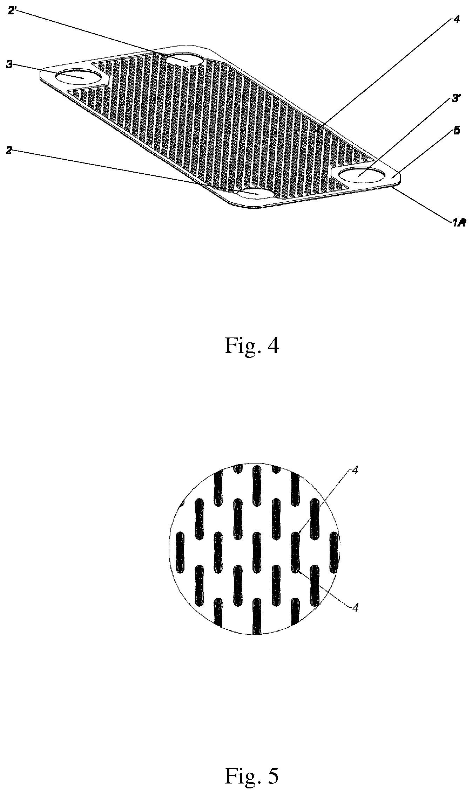

In one embodiment the turbulising elements 4 of a specific plate 1A, 1B, contact the flat side of the neighbouring plate 1A, 1B at the point where the turbulising elements 4 of the neighbouring plate 1A, 1B are situated (Fig. 5), while in another embodiment the turbulising elements 4 of a specific plate 1A, 1B contact the flat side of the neighbouring plate 1A, 1B at the point where some of turbulising elements 4 of the plate are situated, i.e. with a slight mutual shift of turbulising elements 4 of the contacting plates 1A, 1B (not shown on the drawing).

In addition, the heat exchanger is fitted with two closing plates 6 which are put in place on the top and bottom of the stack, also using a stacking frame. Closing plates 6 are 8 mm thick, they are made of the same material as the other elements of the heat exchanger, and their perimeters and shapes are the same as the perimeters and shapes of plates 1A, 1B of the heat exchanger. Moreover, cut in each of end (closing) plates 6 are openings in the places corresponding to openings 2, 2', 3, 3' through which the corresponding agents are supplied and discharged. Once the appropriate number of plates 1A, 1B is stacked, depending on the desired power of the heat exchanger, the whole set is transported to a furnace and bonded into a whole thanks to the diffusion bonding conditions ensured therein. For the material SA-240 316L, the bonding process is achieved at the temperature of 1050°C - 1070°C and lasts between 30 and 120 minutes. Diffusion bonding guarantees a permanent bond between the contacting elements of the heat exchanger. Following the bonding, the heat exchanger is subject to rapid cooling for 240 minutes.

Then, welded to the heat exchanger are inlet and outlet connections 20, 20', 30, 30' for the working agents, which enable the supply and discharge of the working agents to/from the heat exchanger.

A block diagram of a sample method of carrying out the heat exchanger is shown in Fig. 10.

It is envisaged that the shape of the cross section of turbulising elements 4 in all plates 1A, 1B of the heat exchanger may be identical or different.

The shape of turbulising elements 4 on a single plate 1A, 1B may be identical or different.

Moreover, frame 5 of plates 1A, 1B may be made by the incremental printing method using the same material as that used for the plate.

Turbulising elements 4 may be cut from a steel sheet and then placed on the surface of plates 1A, 1B and bonded to the body of plates 1A, 1B, for example by the diffusion bonding or soldering method, or fixed in place by crimping on the plate surface, or formed by the incremental printing method.

It is envisaged that the process of producing the heat exchanger according to the invention will involve various techniques at individual stages of the process, as described above.

The circulation of the working agents in the solution according to this invention is as follows. The agent, for example cold water, supplied via inlet stub pipe 30 flows against plates 1A, while at the same time supplied via inlet stub pipe 20 in countercurrent to the direction of the flow of the water, is a hot working agent, for example supercritical carbon dioxide (sCO2) which flows against the plates 1B. The water flowing through plates A1 heats up, and the carbon dioxide flowing through plates 1B cools down. The heated water leaves the heat exchanger via outlet stub pipe 30', and the cooled carbon dioxide leaves the heat exchanger via outlet stub pipe 20'.

The heat exchanger according to the invention can work in the temperature range from -200°C to +230°C and at any pressure of up to 150 bars.

### List of numerical references

1A - plate of the heat exchanger
1B - plate of the heat exchanger
2 - inlet opening for the first agent
2' - outlet opening for the first agent
3 - inlet opening for the second agent
3' - outlet opening for the second agent
4 - turbulising elements
b - width of the turbulising elements
h - height of the turbulising elements
k - distance between the rows of the turbulising elements
l - length of the turbulising elements
n - leading edge of the turbulising element
s - trailing edge of the turbulising element
5 - frame
6 - end plates
20 - inlet connection for the first agent
20' - outlet connection for the first agent
30 - inlet connection for the second agent
30' - outlet connection for the second agent

## Claims

1. A heat exchanger comprising plates which feature turbulising elements, where the said plates are arranged alternately into a packet so that the neighbouring plates are turned 180° with respect to each other in relation to the direction of the flow of the working agent through the plates, and where the turbulising elements of the specific plate contact the flat side of the neighbouring plate, and further where the packet is fitted with at least one inlet connection and at least one outlet connection for the first working agent, the connections fixed to the plates for the flow of the first agent, and is also fitted with at least one inlet connection and at least one outlet connection for the second working agent, the connections fixed to the plates for the flow of the second working agent wherein turbulising elements (4) of a specific plate (1A) contact the flat side of the neighbouring plate (1B) at the point where the turbulising elements (4) of the neighbouring plate (1B) are positioned or at the point where some of the turbulising elements (4) of the neighbouring plate (1B) are positioned, where the height (h) of the turbulising elements (4) on the plates (1A) for the first working agent is different than the height (h) of the turbulising elements (4) on the plates (1B) for the second working agent, **characterized in that** the turbulising elements (4) are set in an arrangement based on an equilateral triangle so that distance (k) between the rows equals the height of the equilateral triangle the apexes of which are positioned at the ends of two neighbouring turbulising elements (4) of the same row and at the respective end of turbulising element (4) positioned in the neighbouring row between the said turbulising elements (4).

2. The heat exchanger according to claim 1, **characterised in that** turbulising elements (4) feature an arch-shaped side surface.

3. The heat exchanger according to claim 1 or 2, **characterised in that** the cross section of turbulising elements (4) has the shape of the aeronautical profile.

4. The heat exchanger according to caim 1 or 2, **characterised in that** the cross section of turbulising elements (4) has the shape of an ellipse.

5. The heat exchanger according to claim 3 or 4, **characterised in that** width (b) of turbulising elements (4) does not exceed 7 mm.

6. The heat exchanger according to any one of the claims 3 to 5, **characterised in that** length (l) of turbulising elements (4) does not exceed 15 mm.

7. The heat exchanger according to claim 3, **characterised in that** the point of the maximum width (b) of turbulising elements (4) falls no farther than 0.5 the length (l) of turbulising element (4) when measuring from leading edge (n), preferably at 0.10 the length (l).

8. The heat exchanger according to claim 1 or 2, **characterised in that** the cross section of turbulising elements (4) has the shape of of a circle.

9. The heat exchanger according to claim 8, **characterised in that** the diameter of turbulising elements (4) is not larger than 15 mm.

10. The heat exchanger according to any one of the claims 1 to 9, **characterised in that** the height (h) of turbulising elements (4) in any successive row is larger than that in the preceding row by the same value, or the height (h) of turbulising elements (4) in any successive row is smaller than that in the preceding row by the same value.

11. The heat exchanger according to any of one the claims 1 to 10, **characterised in that** plates (1A, 1B) incorporate between 16000 and 39000 turbulising elements (4) per 1 m² of the surface, not counting turbulising elements (4).

12. The heat exchanger according to claim 1, **characterised in that** turbulising elements (4) are made of the same material as the body of plate (1A, 1B).

13. The heat exchanger according to claim 1, **characterised in that** plate (1A, 1B) features frame (5) positioned along the perimeter of plate (1A, 1B).

## Patentansprüche

1. Ein Wärmetauscher, der Platten mit Turbulatoren enthält, wobei die genannten Platten abwechselnd in einem Paket angeordnet sind, sodass benachbarte Platten in Bezug auf die Strömungsrichtung des Arbeitsmediums durch die Platten um 180° zueinander verdreht sind, wobei die Turbulatoren einer Platte an der glatten Seite der benachbarten Platte anliegen, und das Paket mit mindestens einem Einlaufanschluss und mindestens einem Auslaufanschluss für das erste Arbeitsmedium versehen ist, wobei diese Anschlüsse an den Platten für den Durchfluss des ersten Arbeitsmediums angebracht sind, und mit mindestens einem Einlaufanschluss und mindestens einem Auslaufanschluss für das zweite Arbeitsmedium versehen ist, wobei die Anschlüsse an den Platten für den Durchfluss des zweiten Arbeitsmediums angebracht sind, wobei die Turbulatoren (4) der jeweiligen Platte (1A) an der glatten Seite der benachbarten Platte (1B) an der Stelle der Turbulatoren (4) der benachbarten Platte (1B) oder an der Stelle eines Teils der Turbulatoren (4) der benachbarten Platte (1B) anliegen, wobei die Höhe (h) der Turbulatoren (4) in den Platten (1A) für das erste Arbeitsmedium anders ist als die Höhe (h) der Turbulatoren (4) in den Platten (1B) für das zweite Arbeitsmedium, **dadurch gekennzeichnet, dass** die Turbulatoren (4) in einer auf einem gleichseitigen Dreieck basierenden Anordnung so angeordnet sind, dass der Abstand (k) zwischen den Reihen der Höhe eines gleichseitigen Dreiecks entspricht, dessen Eckpunkte an den Enden zweier benachbarter Turbulatoren (4) derselben Reihe sowie am entsprechenden Ende eines Turbulators (4) liegen, das in der benachbarten Reihe zwischen den genannten Turbulatoren (4) angeordnet ist.

2. Der Wärmetauscher nach Anspruch 1, **dadurch gekennzeichnet, dass** die Turbulatoren (4) eine gebogene Seitenfläche aufweisen.

3. Der Wärmetauscher nach Anspruch 1 oder 2, **dadurch gekennzeichnet, dass** der Querschnitt der Turbulatoren (4) die Form eines Flugprofils aufweist.

4. Der Wärmetauscher nach Anspruch 1 oder 2, **dadurch gekennzeichnet, dass** der Querschnitt der Turbulatoren (4) die Form einer Ellipse aufweist.

5. Der Wärmetauscher nach Anspruch 3 oder 4, **dadurch gekennzeichnet, dass** die Breite (b) der Turbulatoren (4) nicht größer ist als 7 mm.

6. Der Wärmetauscher gemäß einem der Ansprüche 3 bis 5, **dadurch gekennzeichnet, dass** die Länge (l) der Turbulatoren (4) nicht größer ist als 15 mm.

7. Der Wärmetauscher nach Anspruch 3, **dadurch gekennzeichnet, dass** die maximale Breite (b) der Turbulatoren (4) in einem Abstand von bis zu 0,5 der Länge (l) des Turbulators (4), gemessen von der Angriffskante (n), vorzugsweise bei 0,10 der Länge (l) liegt.

8. Der Wärmetauscher nach Anspruch 1 oder 2, **dadurch gekennzeichnet, dass** der Querschnitt der Turbulatoren (4) eine Kreisform aufweist.

9. Der Wärmetauscher nach Anspruch 8, **dadurch gekennzeichnet, dass** der Durchmesser der Turbulatoren (4) nicht größer ist als 15 mm.

10. Der Wärmetauscher gemäß einem der Ansprüche 1 bis 9, **dadurch gekennzeichnet, dass** die Höhe (h) der Turbulatoren (4) in den aufeinanderfolgenden Reihen in der jeweils nächsten Reihe gegenüber der vorhergehenden Reihe um denselben Wert oder dieselbe größer ist, oder die Höhe (h) der Turbulatoren (4) in den aufeinanderfolgenden Reihen in der jeweils nächsten Reihe gegenüber der vorhergehenden Reihe um denselben Wert kleiner ist.

11. Der Wärmetauscher gemäß einem der Ansprüche 1 bis 10, **dadurch gekennzeichnet, dass** die Platten (1A, 1B) 16000 bis 39000 Turbulatoren (4) in Bezug auf 1 m² Fläche ohne die Turbulatoren (4) umfassen.

12. Der Wärmetauscher nach Anspruch 1, **dadurch gekennzeichnet, dass** die Turbulatoren (4) aus demselben Material bestehen wie der Plattenkörper (1A, 1B).

13. Der Wärmetauscher nach Anspruch 1, **dadurch gekennzeichnet, dass** die Platte (1A, 1B) einen am Umfang der Platte (1A, 1B) angeordneten Rahmen (5) aufweist.

## Revendications

1. Échangeur de chaleur comprenant des plaques contenant des éléments générateurs de tourbillons, lesdites plaques étant disposées en alternance en paquet de sorte que les plaques adjacentes soient tournées de 180° l'une par rapport à l'autre par rapport à la direction d'écoulement du fluide de travail à travers les plaques, les éléments générateurs de tourbillons d'une plaque donnée adhérant à la face lisse de la plaque adjacente, et ledit paquet étant muni d'au moins un raccord d'entrée et d'au moins un raccord de sortie pour le premier fluide de travail, les raccords étant montés sur les plaques pour la circulation du premier fluide, et étant pourvu d'au moins un raccord d'entrée et d'au moins un raccord de sortie pour le second fluide de travail, les raccords étant montées sur les plaques pour le flux du second fluide de travail, dans lequel les éléments générateurs de tourbillons (4) d'une plaque donnée (1A) adhèrent au côté lisse de la plaque adjacente (1B) à l'emplacement des éléments générateurs de tourbillons (4) de la plaque adjacente (1B) ou à l'emplacement des éléments générateurs de tourbillons (4) de la plaque adjacente (1B), la hauteur (h) des éléments générateurs de tourbillons (4) dans les plaques (1A) pour le premier fluide de travail étant différente de la hauteur (h) des éléments générateurs de tourbillons (4) dans les plaques (1B) pour le second fluide de travail, **caractérisé en ce que** les éléments générateurs de tourbillons (4) sont disposés dans un réseau basé sur un triangle équilatéral de telle sorte que la distance (k) entre les rangées soit égale à la hauteur d'un triangle équilatéral dont les sommets sont situés aux extrémités de deux éléments générateurs de tourbillons adjacents (4) de la même rangée et l'extrémité correspondante de l'élément générateur de tourbillons (4) situé dans la rangée adjacente entre lesdits éléments générateurs de tourbillons (4).

2. Échangeur de chaleur selon la revendication 1, **caractérisé en ce que** les éléments générateurs de tourbillons (4) ont une surface latérale en forme d'arc.

3. Échangeur de chaleur selon la revendication 1 ou 2, **caractérisé en ce que** la section transversale des éléments générateurs de tourbillons (4) a la forme d'un profil aérodynamique.

4. Échangeur de chaleur selon la revendication 1 ou 2, **caractérisé en ce que** la section transversale des éléments générateurs de tourbillons (4) a une forme elliptique.

5. Échangeur de chaleur selon la revendication 3 ou 4, **caractérisé en ce que** l'épaisseur (b) des éléments générateurs de tourbillons (4) est au plus égale à 7 mm.

6. Échangeur de chaleur selon l'une quelconque des revendications de 3 à 5, **caractérisé en ce que** la longueur (l) des éléments générateurs de tourbillons (4) est au plus égale à 15 mm.

7. Échangeur de chaleur selon la revendication 3, **caractérisé en ce que** la largeur maximale (b) des éléments générateurs de tourbillons (4) est située à une distance allant jusqu'à 0,5 de la longueur (l) de l'élément générateur de tourbillons (4) mesurée à partir du bord d'attaque (n), avantageusement à 0,10 de la longueur (l).

8. Échangeur de chaleur selon la revendication 1 ou 2, **caractérisé en ce que** la section transversale des éléments générateurs de tourbillons (4) est circulaire.

9. Échangeur de chaleur selon la revendication 8, **caractérisé en ce que** le diamètre des éléments générateurs de tourbillons (4) est au plus égale à 15 mm.

10. Échangeur de chaleur selon l'une quelconque des revendications 1 à 9, **caractérisé en ce que** la hauteur (h) des éléments générateurs de tourbillons (4) dans les rangées successives est plus grande dans la rangée suivante par rapport à la rangée précédente, la même valeur étant appliquée, ou la hauteur (h) des éléments générateurs de tourbillons (4) dans les rangées successives est plus petite dans la rangée suivante par rapport à la rangée précédente, la même valeur étant appliquée.

11. Échangeur de chaleur selon l'une quelconque des revendications 1 à 10, **caractérisé en ce que** les plaques (1A, 1B) contiennent entre 16 000 et 39 000 éléments générateurs de tourbillons (4) par rapport à 1 m² de surface sans éléments générateurs de tourbillons (4).

12. Échangeur de chaleur selon la revendication 1, **caractérisé en ce que** les éléments générateurs de tourbillons (4) sont fabriqués dans le même matériau que le corps de la plaque (1A, 1B).

13. Échangeur de chaleur selon la revendication 1, **caractérisé en ce que** la plaque (1A, 1B) a un cadre (5) situé sur le périmètre de la plaque (1A, 1B).
